# EUROPEAN PATENT APPLICATION

(11) **EP 0 856 906 A2**
(43) Date of publication of application: **05.08.1998**
(21) Application number: 98300600.8
(22) Date of filing: 28.01.1998
(51) Int. Cl.: H01Q 1/38, H01Q 11/08, H01Q 1/24

(54) **Antenna and fabrication method**

(30) Priority: 04.02.1997 GB 9702221
(71) Applicant: ICO Services Ltd., London W6 9BN (GB)
(72) Inventor: Pal, Surendra, Domlur, Bangalore 560 071 (IN); Keshavamurthy, Voddarahalli, Bangalore 560 078 (IN); Mahadevan, Vaidyanathan, Domlur, Bangalore 560 071 (IN); Venkatesh, Vellaluru, Bangalore 560 054 (IN); Kumar, Manickem, Udayanagar, Bangalore 560 016 (IN)
(74) Representative: Read, Matthew Charles

(57) **Abstract**

An antenna 20 for a radio telephone handset 20, intended for use with satellite communications, is fabricated within dimensional and aesthetic norms applicable to antennae for terrestrial application, by forming a flexible printed circuit board 62 64 into a truncated cylindrical support 24 whereon elements 26 28 and matching networks 30 32 are provided, the whole providing a helical multi-element antenna 20, within a radome 42. Variants are shown for non-helical antennae.

## Description

### FIELD OF THE INVENTION

The present invention relates to radio antennae. In greater particularity, the present invention relates to antennae for use in portable radio equipment. In greatest particularity, the present invention relates to antennae for portable radio telephones, especially those used with direct satellite communications.

### BACKGROUND

Portable radio equipment, by very virtue of its portability, is required to have a simple but effective antenna. Private mobile radio (PMR) handheld transceivers (otherwise known as walkie-talkies) and terrestrial cellphones can function with simple whip antennae, which can be mass-produced at reasonable price. However, in satellite communications, the low signal strength margins between a portable radio telephone and the satellite, the need for a controlled polar diagram for the antenna to best utilise the signals strength available, the requirement for the radiation and reception of the handset to exhibit a generally circular polarisation, and the fact that the allocated frequencies for transmission to the satellite and reception from the satellite are proportionately far apart, mean that, effectively, the portable radio telephone must have a complex antenna which is efficiently matched at more than one frequency.

Ergonomic considerations preclude the provision of large or plural antenna assemblies protruding from one handset. Equally, perceived aesthetic norms require a satellite portable radio telephone handset closely to resemble the accepted general appearance of a terrestrial cellular radio telephone handset. This involves the provision of what appears to be a single compact antenna, in the form of a short tube, so to match the aesthetic and ergonomic requirements, when, in reality, the antenna assembly provided is a complex device, capable of efficient performance on more than one frequency and having a circularly polarised polar diagram where there is a distinct bias for radiation to be sent and received in a skywards direction.

An antenna assembly capable of such performance is described in European Patent Application EP 0715369 "Multiband Antenna System", published 5th June 1996 where a quadrifilar helical antenna set, for use in satellite communications, is combined with antennae for two other bands. The antennae are constrained within a narrow tube of sufficiently small dimensions to emulate the general appearance of a "normal" portable radio handset antenna. Among other objectives, the present invention seeks to provide a functional improvement over the antenna disclosed in the stated European Patent Application.

The antenna, chosen as an example for the constructive aspects of present patent application, is the quadrifilar helical satellite communications antenna, as partially described in the stated European Patent Application. The constructive aspects of the present invention can equally be applied to any other suitable style of antenna, such as linear antennae, and antennae using single or plural elements, optionally capable of use on multiple frequencies, and particularly adapted for lightweight, compact, portable use in such equipment as radio telephone handsets, PMR handheld transceivers, and the like.

The antenna described in the stated European Patent Application is a complex device, where normal methods of construction would involve a high manufacturing cost, slow production output due to multiple operations, and a degree of manufacturing variability which would render the rejection rate relatively high, further to increase cost and reduce output. The present invention seeks to provide a method for fabrication of such a complex antenna which is quick, cheap and repeatable.

In the fabrication of a radio antenna, it is necessary to create one or more electrically conductive elements for radio transmission or reception.

Creation is hereinbefore and hereinafter defined as the sequence of actions required to provide a layer of electrically conductive material, in a predetermined pattern and disposition, including either deposition of electrically conductive material or including selective removal of unwanted electrically conductive material from an already existing layer.

### SUMMARY OF THE INVENTION

According to a first aspect, the present invention consists in a method for fabrication of an antenna having a plurality of elements, said method including the steps of: creating a truncated cylindrical support having an inner surface and an outer surface; creating an element of said antenna on a planar support; curving said planar support everywhere to have a diameter less than that of said inner surface of said truncated cylindrical support; inserting said curved, planar support into said truncated cylindrical support; permitting elastic expansion of said curved planar support towards said inner surface of said truncated cylindrical support; and employing said inner surface of said truncated cylindrical support to define the diameter of said curved, planar support.

According to a second aspect, the present invention consists in an antenna, whose fabrication includes the step of creating a conductive element of the antenna on the surface of a truncated cylindrical support.

The first and second aspects of the invention also provide a method and antenna, for use where said antenna comprises a plurality of conductive elements, said truncated cylindrical support comprising an inner surface and an outer surface, said method and antenna including the creation of at least one of the plurality of conductive elements of said antenna on said inner surface.

The first and second aspects of the invention further provide a method and antenna , where fabrication includes the steps of creating a conductive element of said antenna on a lamina and altering the shape of said lamina to form said truncated cylindrical support.

The first and second aspects of the invention , yet further, provide a method and antenna, wherein said lamina is a planar support, fabrication including the steps of creating an element on said planar support, curving said planar support everywhere to have a diameter less than that of said truncated cylindrical support, thereafter permitting elastic expansion of said planar support towards said diameter of said truncated cylindrical support, and constraining said expansion to be limited only to the diameter said truncated cylindrical support.

According to the first and second aspects, the invention provides, still further, a method and antenna where fabrication includes the steps of creating a first element of said antenna on said truncated cylindrical support, creating a second element of said antenna on a non-cylindrical support, and adapting said non-cylindrical support to conform with a surface of said truncated cylindrical support.

The first and second aspects of the invention also provide a method and antenna where fabrication includes the steps of curving said non-cylindrical support everywhere to have a diameter less than that of said truncated cylindrical support, thereafter permitting elastic expansion of said non-cylindrical support towards said diameter of said truncated cylindrical support, and employing said truncated cylindrical support to limit said expansion.

The first and second aspects of the invention, still further, provide a method and antenna where fabrication includes the steps of joining edges of said lamina to each other to form said cylindrical support.

Yet further, the first and second aspects of the invention provide a method and antenna where fabrication includes the use of one or more fixable tabs for joining said edges.

Still further, the first and second aspects of the invention provide a method and antenna wherein said lamina comprises a flexible, multi-layer printed circuit board.

The first and second aspects of the invention also provide a method and antenna wherein said non cylindrical support comprises a multi-layer, flexible, printed circuit board.

The first and second aspects of the invention also provide, in addition to all of the other provisions of the first and second aspects of the invention, taken separately or in combination, that, separately or in any combination, said antenna comprises a plurality of elements for use on a plurality of frequencies, that said antenna comprises a spiral element, the spiral element possibly being part of a quadrifilar helix, that said antenna includes a matching network, and that said antenna comprises an element at an angle to the axis of the truncated cylindrical support to compensate for the angle of use of the antenna.

### BRIEF DESCRIPTION OF THE DRAWINGS

The invention is further described, by way of example, by the following description, taken in conjunction with the appended drawings, in which:
Figure 1 is a projected view of a typical radio telephone handset, showing the disposition of the antenna;
Figure 2 shows the internal parts of the antenna of Figure 1;
Figure 3 shows the parts of Figure 2 housed and mounted;
Figures 4A, 4B and 4C show the individual housing and mounting entities of Figure 3, including a mounting bush and a radome;
Figure 5 shows the manner of deposition of the antenna elements of Figure 2 on a pair of flexible substrates;
Figure 6 shows the manner of formation of the flexible substrates of Figure 5 to make a truncated cylindrical support;
Figures 7A and 7B show an alternative manner of insertion of one of the substrates of Figures 5 and 6 into the other to form the truncated cylindrical support;
Figures 8A and 8B show an alternative manner of making the truncated cylindrical support by insertion of a flexible substrate into the radome of Figure 4;
Figure 9 shows a single flexible substrate alternative to the solution shown in Figure 5;
Figure 10 shows a dual flexible substrate alternative to the solution shown in Figure 5;
Figures 11A and 11B show solutions employing flexible, multi-layer printed circuit boards;
Figures 12A and 12B show a solution, suitable for non-helical antenna structures;
Figures 13A and 13B show a solution where an antenna may be tilted to accommodate the angle of use of the handset of Figure 1;
Figure 14 shows one method of mass production of the different antenna structures of the earlier Figures; and
Figure 15 shows another method of mass production of antenna elements directly onto the outside of a pre-formed rigid tube.

### DETAILED DESCRIPTION

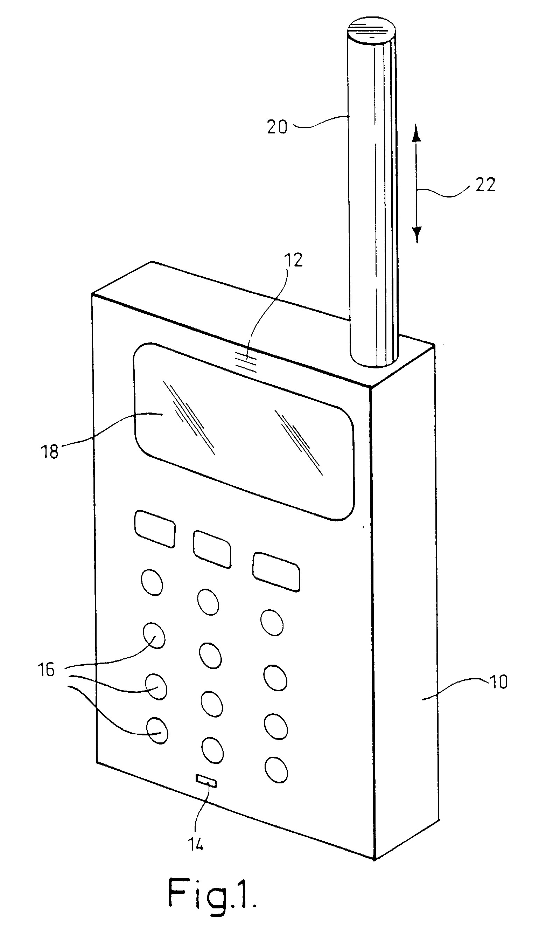

Attention is drawn to Figure 1. A radio telephone handset 10 comprising an earpiece 12, a microphone 14, bottoms 16 and a display 18, also comprises an antenna 20 for transmission and reception of radio signals. The antenna 20 may, optionally, be insertable into or retractable from the body of the handset 10, as indicated by a first dual directional arrow 22. In addition, the antenna 20 can be made to swivel, relative to the body of the handset 10, so that, when the handset 10 is slightly tilted, when in use, the antenna 20 remains vertical for best polar diagram response. The swivel can be made to act in two directions, so that the antenna can be upright to accommodate both left handed and right handed users.

The handset 10 is of the normal style and dimensions employed for radio telephone handsets such as GSM, using terrestrial based stations for cellular communications. The present invention is particularly directed to such a handset which also is capable of communicating, with lower signal strength margin, with communications satellites in orbit about the earth.

Those skilled in the art will be aware that, for satellite communications, more efficient antennae with controllable polar diagrams are required. None the less, it is necessary to maintain the general dimensions of a normal antenna as found on a normal radio telephone handset.

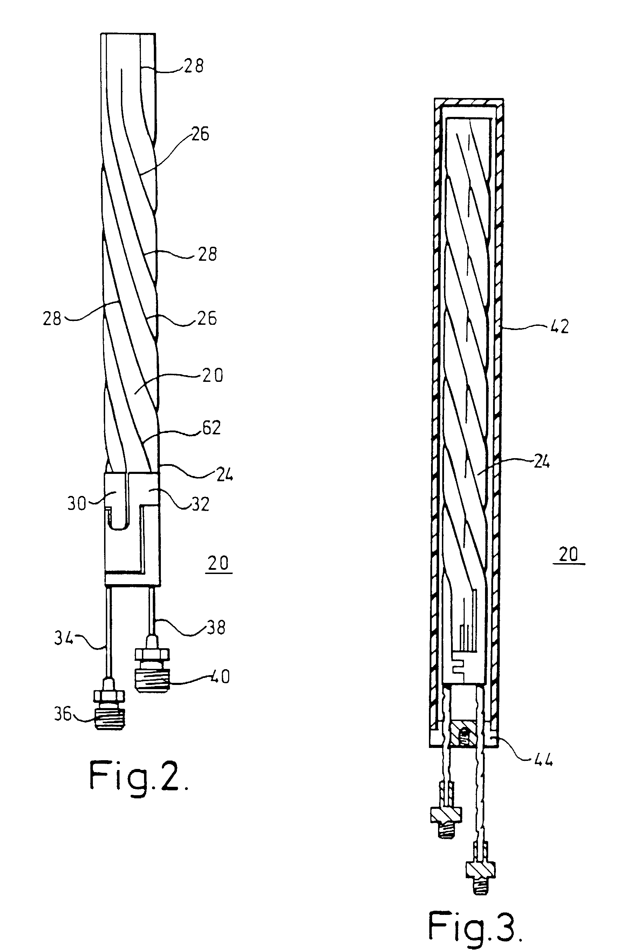

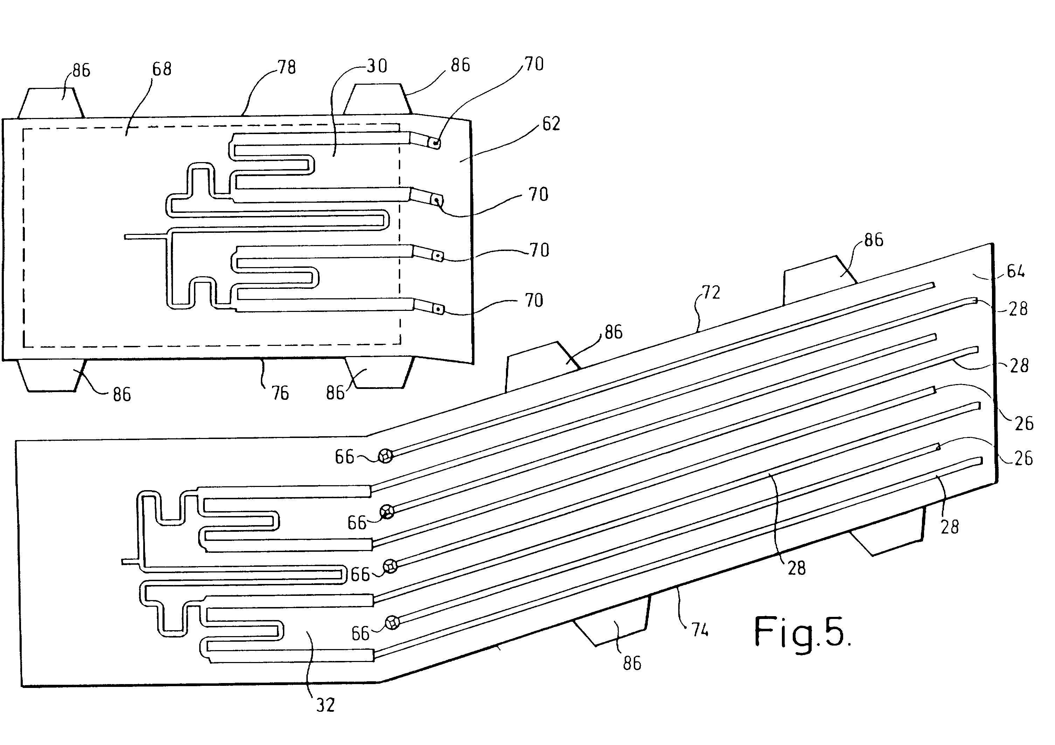

Figure 2 shows the internal parts of the antenna 20 of Figure 1.

A truncated cylindrical support 24 comprises a first set 26 of spiral elements, equiangularly displaced about the cylindrical support 24 and lying between respective pairs of a second set of elements 28, also helical and angularly equi-spaced around the truncated cylindrical support 24. The first set 26 and the second set 28 of elements between them provide an interlaced pair of quadrifilar helical antennae. The first set 26 of elements have a first, common, shorter length than a second, common, longer length of the second set of elements 28. The first set of elements 26 work on a first frequency for transmission and the second set of elements 28 work on a second frequency for reception.

Also part of the antenna 20, and provided on the truncated cylindrical support 24, are a first matching network 30 for the first set of elements 26, and a second matching network 32 for the second set of elements 28. The first matching network 30 is connected internally to the handset 10 by a first miniature coaxial cable 34 and first miniature coaxial connector 36 and the second matching network 32 is connected, internally, to the handset 10 by a second miniature coaxial cable 38 and a second miniature coaxial connector 40. The first 34 and second 38 miniature coaxial cables permit the antenna 20, if required, to be capable of retraction into the body of the handset 10 and extension, as shown in figure 1, from the body of the handset 10, as indicated by the first bidirectional arrow 22. The coaxial cables 34 38 are simply one means whereby the antenna 20 can be connected to the handset 10. It is also envisaged that the antenna 20 can receive connections by means of direct plugs and sockets, sliding contacts, slip rings, crimped connectors, and any other means known in the art. Noncontact methods can also be employed, where two, electrically isolated conductors can be brought together, still insulated, one from another, to complete the plates of a capacitor, or to complete the two halves of a stripline, thereby to couple the antenna 20 to the handset 10, the handset 10 comprising one of each pair of the electrically isolated conductors and the antenna the other. Where required, plural pairs of electrically isolated conductors can be employed.

Figure 3 shows the internal parts of the antenna 20, as shown in figure 2, assembled into a complete unit.

The truncated cylindrical support 24 is assembled within a hollow cylindrical radome 42. The radome 42 is made of low loss, radio transparent material, such as Teflon (trade mark). The truncated cylindrical support 24 is held, firmly, within the radome 42, by means of a mounting bush 44 which engages and holds the base of the truncated cylindrical support 24 and also engages the open end of the radome 42.

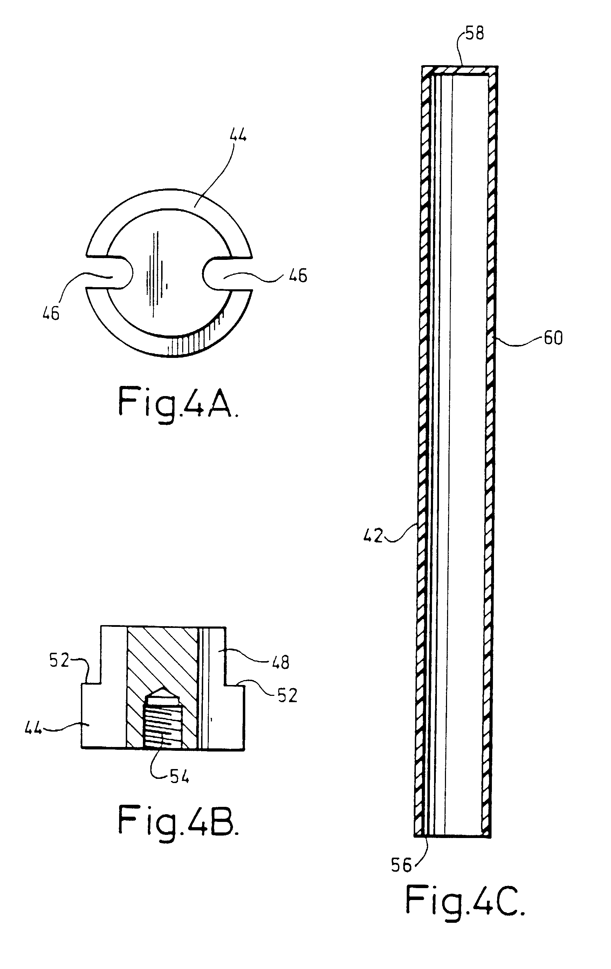

Figure 4A shows a bottom view of the mounting bush 44 of figure 3, in particular showing a pair of channels 46 through which the miniature coaxial cables 34, 38 figure 2 can pass.

Figure 4B shows a side view of the mounting bush 44 of figures 3 and 4A. The mounting bush 44 is essentially cylindrical, with a first, narrow portion 48 engaging the truncated cylindrical support 24 on its distal surface 50. The narrow portion 48 also fitting within the open end of the radome 42 to support the open end of the radome 42 on a circular ledge 52. A threaded hole 54 permits the attachment of the mounting bush 44, and hence of the entire antenna 20, when assembled, on any convenient support within the body of the handset 10. The support can simply hold the antenna 20 in one opposition, or can allow insertion and withdrawal of the antenna 20, swivelling of the antenna 20, or any other movement which it may be convenient to allow the antenna 20 to execute relative to the handset 10 body.

While, in this preferred embodiment, a threaded hole 54 has been shown in the mounting bush 44 as the preferred manner of attaching the antenna 20 to the handset 10, it is to be understood that any other convenient means for holding the antenna 20 can be used, including clips, collars, push-fit cavities, plugs, sockets and the like.

Figure 4C shows a cross sectional view of the radome 42, which has an open lower edge 56 and a closed upper end 58, at either end of a hollow cylindrical body 60. The radome 42, when in place, serves to protect the elements 26 28 of the antenna 20, together with the matching networks 30 32, from mechanical, climatic and chemical ingress, thus preserve the matching and resonance characteristics of the antenna 20.

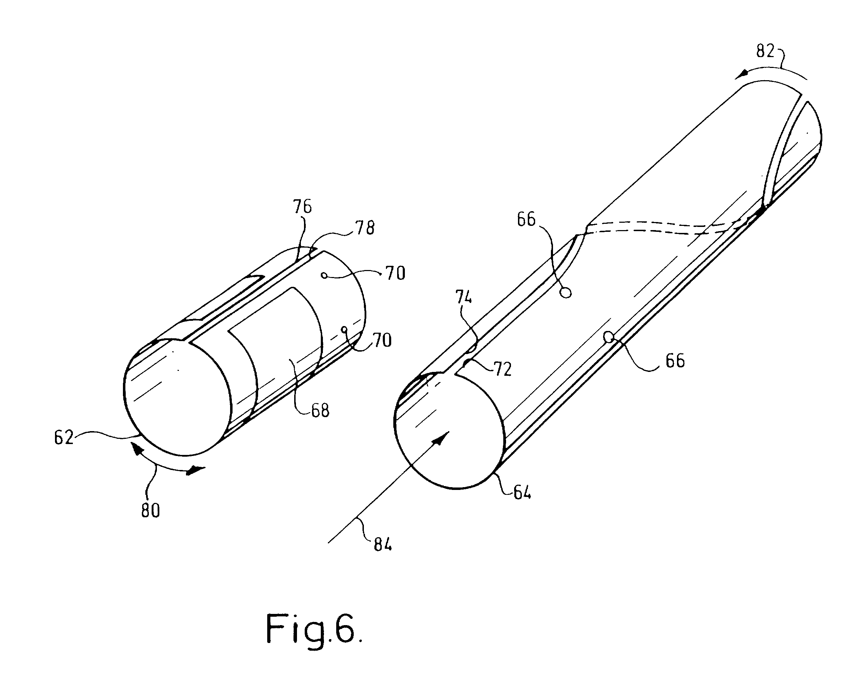

Figure 5 is a plan view in which one method of creating the antenna of figures 2, 3 and 4 can be accomplished.

Two laminae are provided in the form of two non-cylindrical substrates, in this instance, a first flexible printed circuit board 62 and a second flexible printed circuit board 64. The first flexible printed circuit board 62 carries the first matching network 30, coupled to the first set 26 of antenna elements. The second flexible printed circuit board 64 carries the second matching network 32, together with the first 26 and second 28 sets of elements. The second set of elements 28 is connected to the second matching network 32. Each of the first elements 26 is terminated in a respective first through-plated hole 66.

The first flexible printed circuit board 62 bears the first matching network 30 on a first side, and, shown in dotted outline, on a second side, a continuous ground plane 68 of conductive electrical material. The outputs of the first matching network 30 are terminated in second through-plated holes 70 which correspond in placing a relative position to the first through-plated holes 66 of the first elements 26.

The second flexible printed circuit board 64 comprises a first edge 72 and a second edge 74 on opposite sides thereof. Likewise, the first flexible printed circuit board 62 also comprises a first edge 76 and a second edge 78.

In the region of the second matching network 32, the first 72 and second 74 edges of the second printed circuit board 64 are generally parallel to the direction in which the antenna 20 is intended to lie. However, in the region of the elements 26 28, the elements themselves 26 28 and the edges 72 74 are tilted so that they lie at a predetermined angle to the intended predetermined axis of the cylindrical antenna 20.

Figure 6 shows how the first printed circuit board 62 and the second printed circuit board 64 are rolled to provide the basic form of the truncated cylindrical support 24 of the antenna 20.

The first flexible printed circuit board 62 has its edges 76 78 brought together as indicated by a second arrow 80 to form a truncated cylindrical portion of short length and a first diameter. The second printed flexible printed circuit board 64 is rolled, as indicated by a third arrow 82, into a spiral, involving, in this instance, but not necessarily limited to, a fractional turn, to form a second portion of the truncated cylindrical support 24 at a second diameter. The second diameter is sufficiently large to allow insertion of the first portion, namely the first flexible printed circuit board 62, into the base thereof as indicated by a fourth arrow 84. The first through-plated holes 66 and the second through-plated holes 70 are then aligned and soldered together in their corresponding correct positions, using either direct soldering or inserted pins.

It is to be noted that the ground plane 68 on the first flexible printed circuit board 62 is disposed to lie on the outside of the first portion 62 as shown in figure 6. When inserted as shown by the fourth arrow 84 and the assembling is complete, the antenna 20 has the first matching network 30 and the second matching network 32 separated by the ground plane 68. The coaxial cables 34 36 then have their inner conductors joined to respective matching networks 30 32 and their outer conductors joined to the ground plane 68.

In order to achieve the construction shown in figure 6, the first 62 and second 64 printed circuit boards maybe formed around mandrels and the mandrels thereafter removed. Alternatively, thin cylindrical mandrels may be inserted and the first 62 and second 64 printed circuit boards glued to the surface thereof, the first printed circuit board 62 then being inserted, as shown by the arrow 84, inside the larger diameter mandrel used to create the curvature of the second flexible printed circuit board 64.

Alternatively, the first 62 and second 64 printed circuit boards may themselves become the sole constituents of the truncated cylindrical support 64 and may have their edges 72 74 76 78 directly glued together or the act of gluing can employ tabs 86, shown as additions to figure 5, which can be used, by extension thereunder, to glue the edges 72 74 76 78 of the first 62 and the second 64 flexible printed circuit boards together.

While figures 5 and 6 show an antenna making an only fractional turn to create a helix, it is to be understood that the principle may be extended to permit helices of greater or lesser number of turns to be created.

With reference to figures 5 and 6, the first elements 26, when the second printed circuit board 64 is formed into the truncated cylindrical support 24, are angularly equispaced around the truncated cylindrical support. Likewise, the second elements 28 are also angularly equispaced around the truncated cylindrical support 24, and, in addition, equispaced between the first elements 26.

The first matching network 30, as will be apparent by inspection, if one of the first elements 26 is arbitrarily assigned a zero degree phase at its frequency of operation, sets the phase of each of the subsequent elements 26 in accordance with its angular position around the truncated cylindrical support 24. Going around the support, the arbitrary phase element is set at zero degrees. Next around, the phase of the element 26 is ninety degrees. One place further around, and the phase is one hundred and eighty degrees. Go one element further around, and the phase is two hundred and seventy degrees, One more place around and the phase returns to zero degrees.

The second matching network 32 has exactly the same function on the second elements 28, this time on the frequency at which the second elements 28 are designed to operate.

It is to be appreciated that the matching networks 30 32, here shown as striplines, can be replaced by any other implementation which achieves the same function.

Equally, although a plurality of four equispaced helical elements have here been shown, different numbers of angularly equispaced elements 26 28 can be employed. If three elements were employed, the phases would be 0 degrees, 120 degrees and 240 degrees. If five angularly equispaced elements 26 28 were employed, the phases would be 72 degrees, 144 degrees, 216 degrees and 288 degrees. In general, if N angularly equispaced elements 26 28 were employed, the phases would be stepwise multiples of 360/N degrees.

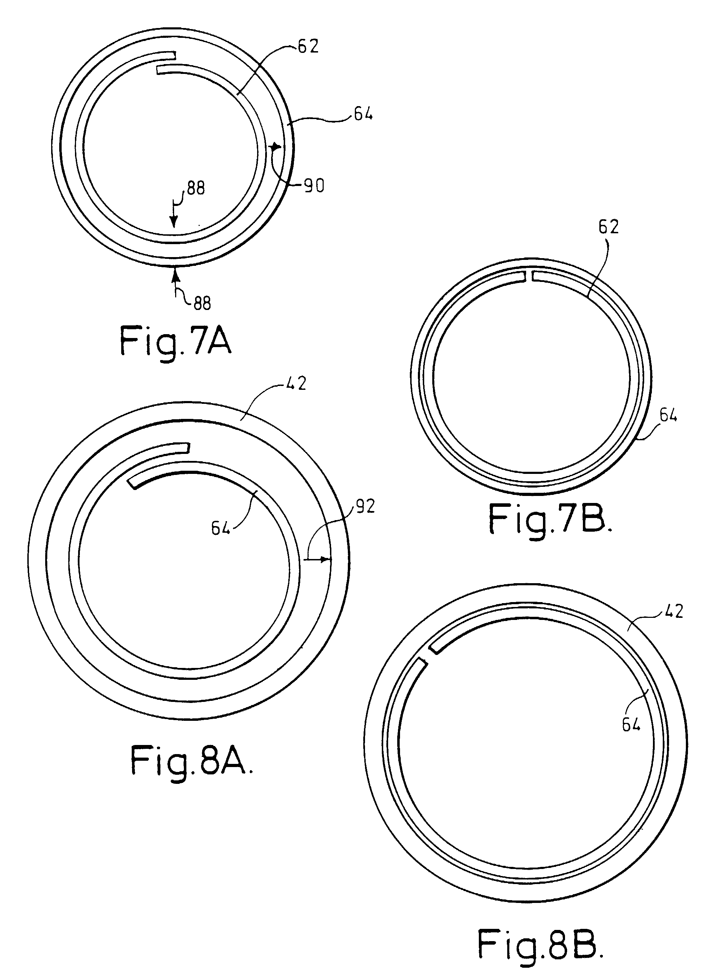

Figures 7A and 7B show an alternative method of fixing the first printed circuit board 62 within the second printed circuit board 64.

The second printed circuit board 64, having been formed into its spiral version of a truncated cylinder, the first printed circuit board 62 is made into a diameter which is less than the internal diameter of the formed second printed circuit board 64. A fixed point, relative to the first 62 and second 64 flexible printed circuit board, is clamped as indicated by fifth arrows 88 to ensure complete registration there-between. The first flexible printed circuit board 62 in figure 7A is then allowed, elastically, to expand as indicated by a sixth arrow 90 towards the internal diameter of the formed second flexible printed circuit board 64. The final result is shown in figure 7B where the first flexible printed circuit board 62 has, within the second flexible printed circuit board 64 come to rest in a perfect short cylindrical form therein. Other stages of fabrication can follow thereon, such as the joining of the first 66 and second 70 through-plated holes, in the manner described for figures 5 and 6.

Figures 8A and 8B show, in a manner similar to that shown with respect to figure 7A and 7B, a way in which the second flexible printed circuit board 64 may automatically be brought to its correct shape within the radome 42.

The second flexible printed circuit board 64, having being slightly over twisted into its spiral shape as shown in figure 6 so that it has a smaller diameter than the interior of the radome 42, is inserted into the base thereof to lie in the correct position along its axis, and then allowed elastically to expand as indicated by a seventh arrow 92 to be constrained within the internal diameter of the radome 42 as indicated in figure 8B. The truncated cylindrical support 24 is thereby created within the radome 42 to accurate dimensional tolerances without the necessity for accurate dimensional processes. The procedure of figure 8A and 8B having being completed, the procedure of figures 7A and 7B can then be applied.

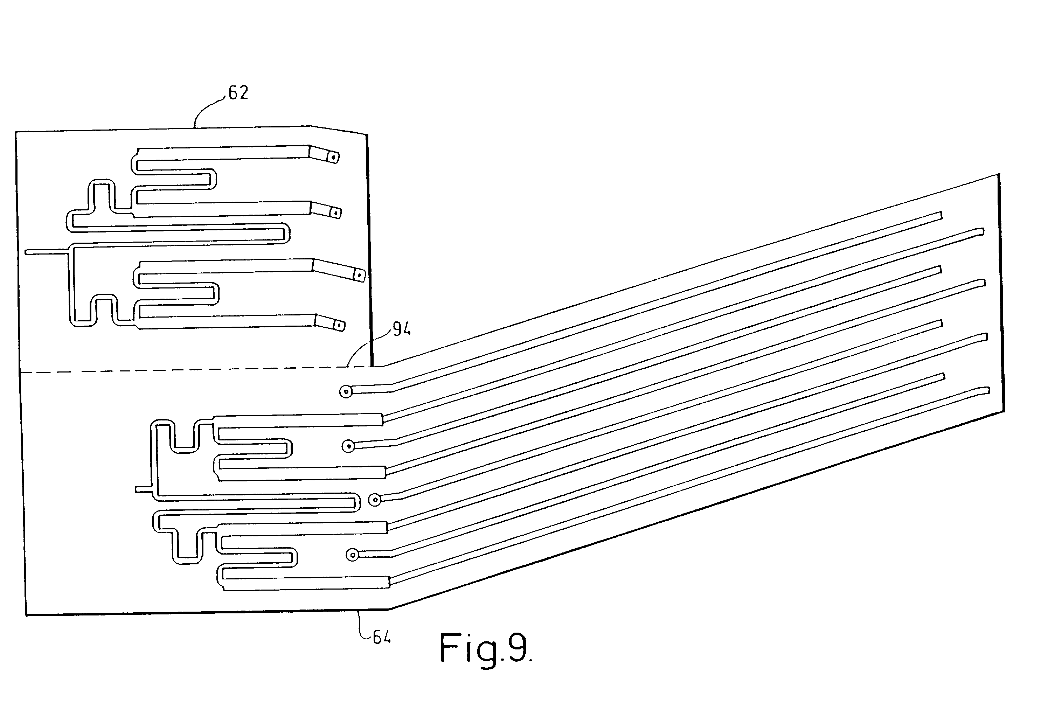

Figure 9 shows an alternative provision of the first 62 and second 64 flexible printed circuit boards where they are made as a unit and joined along a fold line 94. The first flexible printed circuit board 62 is then merely folded behind the second flexible printed circuit board 64 along the fold line 94 and the whole assembly subjected to the same curving process of the second flexible printed circuit board 64 as shown in figure 6.

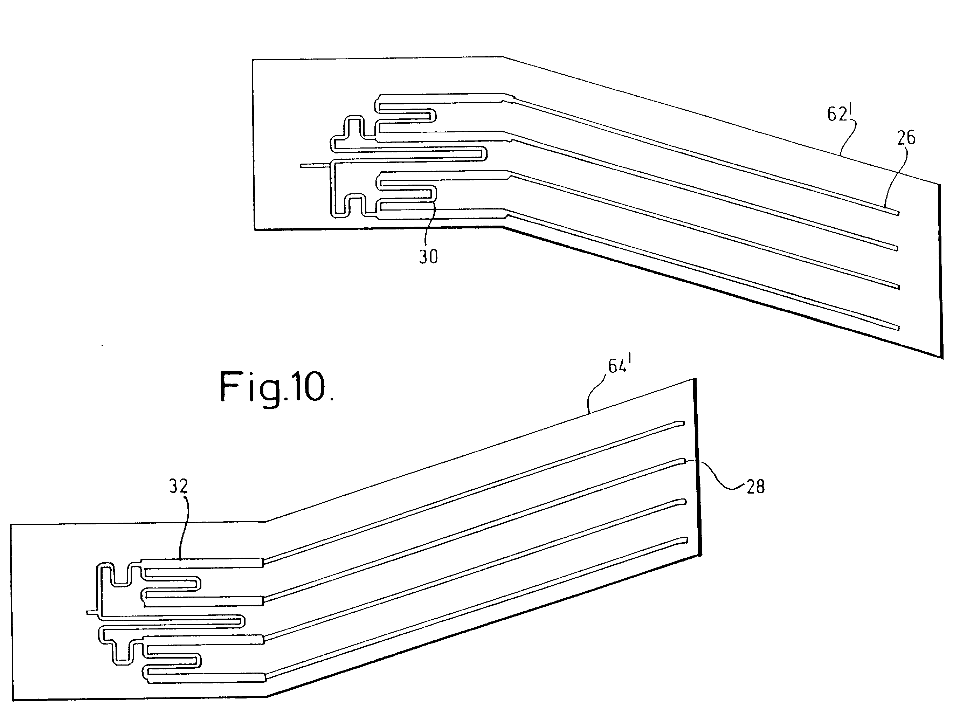

Figure 10 shows another alternative where the first elements 26 and the first matching network 30 are isolated on a first modified flexible printed circuit board 62' and a second matching network 32 and the second elements 28 are isolated on a second modified flexible printed circuit board 64'. Each of the first and second modified printed circuit boards 62' 64' are curved, in the manner shown for the second flexible printed circuit board 64 in figure 6 and fitted one within the other to achieve the truncated cylindrical support 24 for the elements 26 28. Equally, the procedures of figures 7A, 7B, 8A, 8B can be invoked. Figure 10 shows the two modified flexible printed circuit boards 62' 64' threaded in opposite directions. It is to be understood that they can be thread in the same direction if required.

Figure 11A shows an implementation of the antenna 20 in a multi-layer flexible printed circuit board.

A first metallised layer 96 lies beneath a first insulating layer 98 and provides the second matching network 32 and the elements 26 28 via the first metallised layer 96. A second insulating layer 100 provides separation between the second matching network 32 and the ground plane 68, provided on a second metallised layer 102. A third insulating layer 104 separates the ground plane 68 from the first matching network 30, provided on a third metallised layer 106, and connected to the first elements 26 in the first metallised layer 96 via a through-board connection 108. Finally, a fourth insulating layer 110 seals the third metallised layer 106 against the environment. The whole item can be curved and formed as shown in figure 6, or in any figure thereafter.

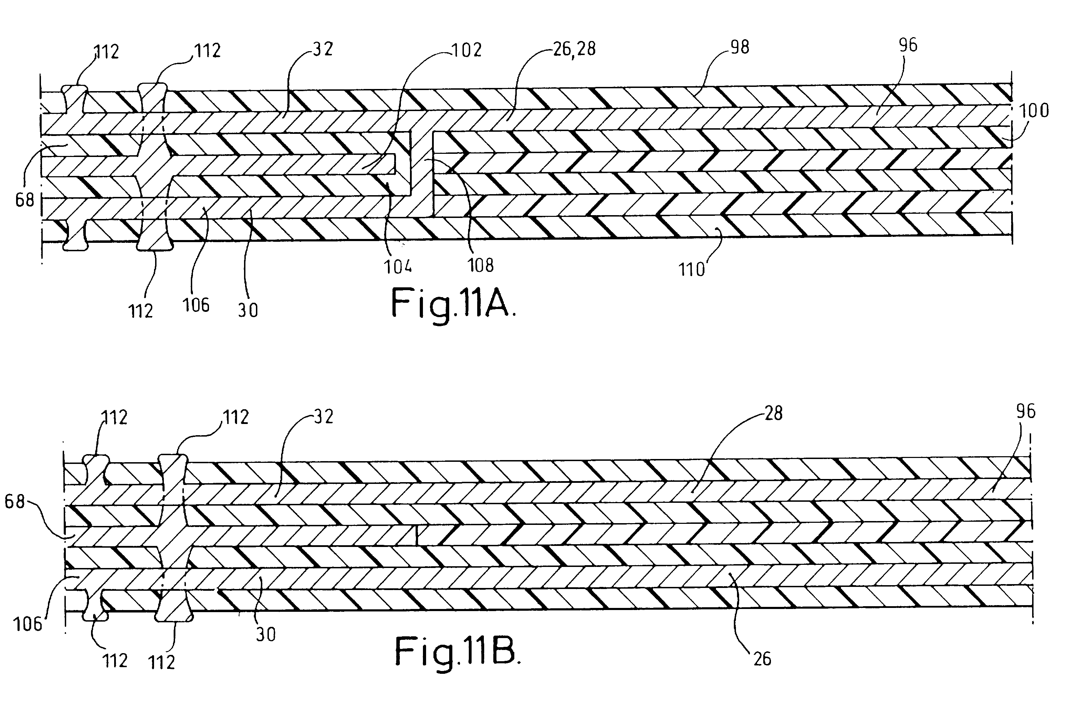

Figure 11B shows, essentially, the same arrangement as in figure 11A, except that the first elements 26 are now provided on the third metallised layer 106 and the second elements 28 are the only items provided on the distal portion of the first metallised layer 96.

In both figures 11A and 11B, external connections 112 are provided, independently, to the first matching network 30, the second matching network 32 and the ground plane 68.

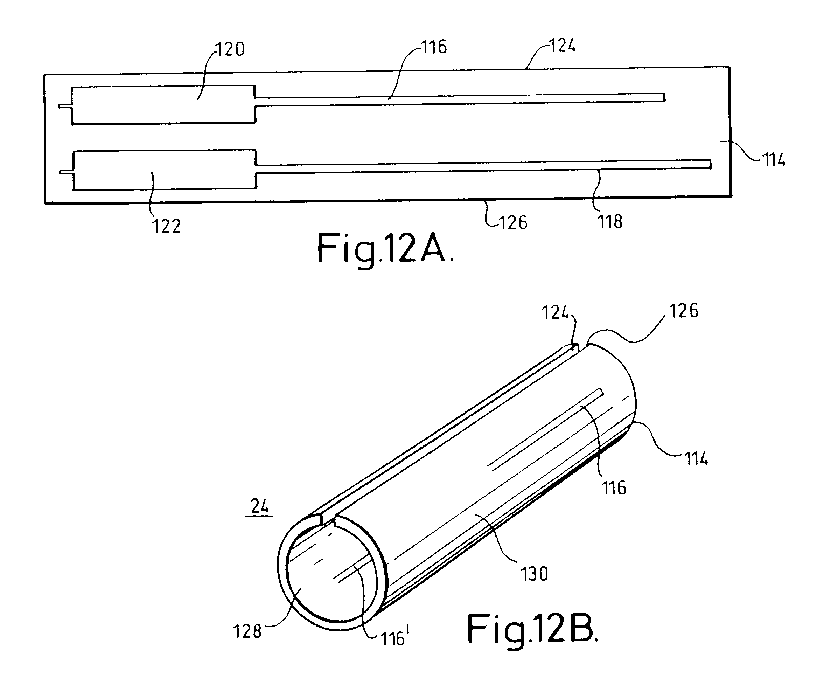

Figures 12A and 12B show the manner of application of the present invention to one or more non-spiral elements.

A straight-edged flexible printed circuit board 114 has first 116 and second 118 linear antenna elements provided on one, the other or both surfaces thereof, together with corresponding matching networks 120 122. The straight-edged flexible printed circuit board 114 has a first edge 124 and a second edge 126 which are brought together, as shown in figure 12B, by curving the straight-edged flexible printed circuit board 114 to form a truncated cylindrical support. As shown in figure in 12B, the elements 116 118 can be provided either on the interior of the rolled straight-edged flexible printed circuit board 114 or on the exterior thereof. The exact manner of rolling and joining of the edges 124 126 can be in any manner hereinbefore or hereinafter described with reference to other examples.

The antenna created by the means and method shown in 12B can have elements 116 118 disposed on opposite sides of the truncated cylindrical support 24 and, if the matching networks 120 122 are suitably phased, a controllable polar diagram using driven elements can be provided. Alternatively, if a matching network 120 or 122 is omitted, the corresponding element 116 118 can become a parasitic element, suitable for controlling the polar diagram of the antenna 20 in the manner of a passive Yagi Uda array element.

As earlier stated, the elements 116 118 can be fewer or more than two, and can appear both on the inside surface 128 and the outside surface 130 of the truncated cylindrical support 24.

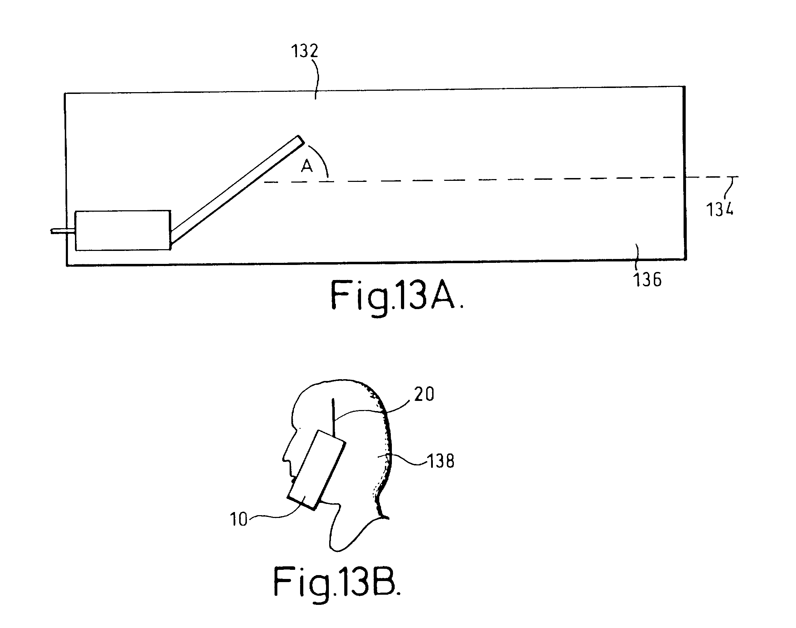

Figure 13A and 13B together show a novel application of the technique combining elements of items shown prior to and included in figures 12A and 12B.

A short antenna element 132 is provided at an acute angle A to the intended direction of the axis 134 of the antenna 20 on the surface of an extended printed circuit board 136, the short antenna element 132 not extending across the entire width of the extended printed circuit board 136.

When the extended flexible printed circuit board 136 is formed as shown in figure 12B or in figures 6 through 8, the short antenna element 132 will lie at an angle to the formed axis 134 of the truncated cylindrical support 24.

Turning now to figure 13B, when the antenna 20 is assembled into the handset 10 at a predetermined orientation, the short antenna element 132 makes an angle with the axis 134 of the antenna 20 whereby the conductive element 132 is angled to compensate for the usual orientation of use of the handset 10 when engaged with a users head 138 for the earpiece 12 to engage the users ear and the mouthpiece 14 to be proximate to the user's mouth.

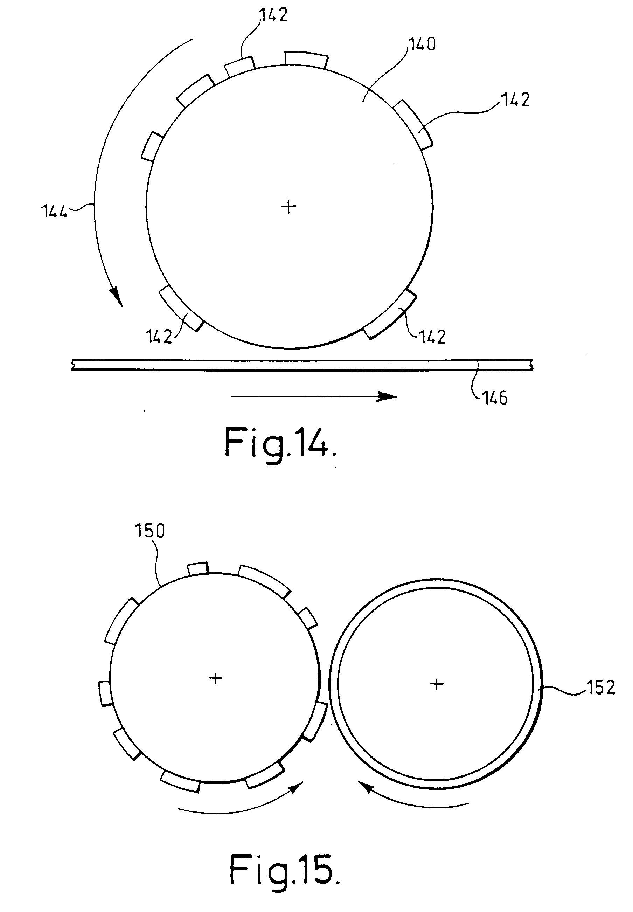

Figure 14 shows a first manner of creating the antenna elements 26, 28, 116, 118, 132 for mass production.

A rotating print wheel 140 has, on the surface thereof, raised areas 142. The print wheel 140 rotates as indicated by an 8th arrow 144 ever to roll against a band of substrate 146 which moves, as indicated by a 9th arrow 148, for the pattern of the raised areas 142 to be transferred to the surface of the substrate 146. As in a normal printing process, the raised areas 142, being coated with a selected substance, transfer their pattern to the surface of the substrate 146. The selected substance can be photo-conductive gel, in which circumstance the band of substrate 146 is passed to an electro- plating bath where the electrically conducting areas which make up the elements 26, 28, 116, 118, 132 are laid down. The band 146 of substrate can then pass on to a die cutting machine, employing a rotating wheel similar to that shown in figure 14, whereby the pieces of flexible circuit board 62, 64, 136, 114, 62', 64' can be cut out prior to assembly.

If the preferred substance is a photo-resist for chemical etching, and the band 146 of substrate is precoated with an electrically conducting layer, the substrate 146 passes, after the photo-resist is cured, directly to an etching bath where unwanted electrically conducting material is removed to leave the pattern of elements and matching networks required.

Figure 15, lastly shows how the elements 26, 28, 116, 118, 132 and the matching networks 30, 32, 120, 122 can be created directly onto the surface of a pre-formed closed-cylinder. This eliminates the curling and joining process hereinbefore described.

Once again, a print wheel 150, having the same diameter as the rigid cylinder 152, is rotated once against the surface of the rigid cylinder 152 to leave a pattern of selected substance on the surface thereof. Thereafter, as described with reference to figure 14, the rigid cylinder 152 can either have electrically conductive material plated thereon, or, if already bearing a layer of electrically conducted material, can have unwanted areas of electrically conducted material removed therefrom. Using the rigid cylinder 152, without joining, a substitute can be found for the element shown in figure 12B, and all of the techniques shown in figures 7A, 7B, 8A and 8B can be employed. In addition, with reference to figure 6, the curled and formed first printed circuit boards 62, can be substituted by a pre-formed cylinder, according to figure 15, for insertion as indicated by the fourth arrow 84 into either the second flexible printed circuit board 64 as shown in figure 6, or into a substitute for the second flexible printed circuit board 64, made according to figure 15. Equally, the ground plane 68 may be provided on a separate rigid cylindrical form of yet another diameter to rest intermediate between the first 30 and second 32 matching networks by insertion as indicated by the fourth arrow 84 into the base of the truncated cylindrical support. Thus, a series of mutually inter-fitting, different diameter, coaxial sections can be used to make a strong and rigid antenna.

## Claims

1. A method for fabrication of an antenna having a plurality of elements, said method including the steps of: creating a truncated cylindrical support having an inner surface and an outer surface; creating an element of said antenna on a planar support; curving said planar support everywhere to have a diameter less than that of said inner surface of said truncated cylindrical support; inserting said curved, planar support into said truncated cylindrical support; permitting elastic expansion of said curved planar support towards said inner surface of said truncated cylindrical support; and employing said inner surface of said truncated cylindrical support to define the diameter of said curved, planar support.

2. An antenna, having a plurality of elements, whose fabrication includes the steps of: creating a truncated cylindrical support having an inner surface and an outer surface; creating an element of said antenna on a planar support; curving said planar support everywhere to have a diameter less than that of said inner surface of said truncated cylindrical support; inserting said curved, planar support into said truncated cylindrical support; permitting elastic expansion of said curved planar support towards said inner surface of said truncated cylindrical support; and employing said inner surface of said truncated cylindrical support to define the diameter of said curved, planar support.

3. A method or an antenna, according to claim 1 or 2, whose fabrication includes the step of taking a lamina and altering the shape of said lamina to form said truncated cylindrical support.

4. A method or an antenna, according to claim 3, whose fabrication includes the step of providing at least some of said plurality of elements on said lamina.

5. A method or an antenna, according to claim 4, whose fabrication includes the step of providing at least some of said plurality of elements on said planar support.

6. A method or an antenna, according to claim 3, 4 or 5, whose fabrication includes the step of joining edges of said lamina to each other to form said truncated cylindrical support.

7. A method or an antenna, according to claim 6, whose fabrication includes the step of using one or more fixable tabs for joining said edges.

8. A method or an antenna, according to claim 3, 4, 5 or 6, wherein said lamina comprises a first flexible, multi-layer printed circuit board.

9. A method or an antenna, according to claim 8, wherein said first multi-layer printed circuit board comprises elements of said antenna on both first and second faces thereof.

10. A method or an antenna, according to any preceding claim wherein said planar support comprises a second multi-layer, flexible, printed circuit board.

11. A method or an antenna, according to claim 10, wherein said second multi-layer printed circuit board comprises elements of said antenna on both first and second faces thereof.

12. A method or an antenna, according to any preceding claim, wherein said antenna comprises a plurality of elements for use on a plurality of frequencies.

13. A method or an antenna, according to any preceding claim, wherein said antenna comprises a spiral element.

14. A method or an antenna, according to claim 13, wherein said spiral element is part of a quadrifilar helix.

15. A method or an antenna, according to any preceding claim, wherein said antenna includes a matching network.
